**Europäisches Patentamt**

(19) **European Patent Office**

**Office européen des brevets**

(11) Veröffentlichungsnummer: **0 118 699**

**A2**

(12) **EUROPÄISCHE PATENTANMELDUNG**

(21) Anmeldenummer: **84100838.6**

(22) Anmeldetag: **27.01.84**

(51) Int. Cl.³: **F 16 H 25/20**

(30) Priorität: **10.02.83 DE 3304487**

(43) Veröffentlichungstag der Anmeldung:
**19.09.84 Patentblatt 84/38**

(84) Benannte Vertragsstaaten:
**AT FR GB IT NL SE**

(71) Anmelder: **SIEGERLAND-BREMSEN EMDE GMBH + CO.**

**D-6342 Haiger 9(DE)**

(72) Erfinder: **Kring, Werner**
**Steinbacher Strasse 15**
**D-6342 Haiger 1(DE)**

(72) Erfinder: **Schleifenbaum, Karl**
**Westerwaldstrasse 15**
**D-6342 Haiger 1(DE)**

(74) Vertreter: **Eisenführ & Speiser**
**Martinistrasse 24**
**D-2800 Bremen 1(DE)**

(54) **Stellantrieb.**

㉗ Ein Stellantrieb zum winkelgenauen Positionieren beispielsweise eines Arbeitsgliedes an einem Roboter weist einen Antriebsmotor und ein Übersetzungsgetriebe auf. Letzteres besteht aus mindestens einem Spindeltrieb, welcher ein um die Abtriebswelle geführtes und an dieser kraft- oder formschlüssig befestigtes Stahlband o. dgl. bewegt. Die Abtriebswelle ist entgegen dem vom Zugmittel aufgebrachten Drehmoment vorgespannt. Die Vorspannung kann durch einen gegensinnig gleichlaufenden Spindeltrieb aufgebracht werden. Außerdem oder alternativ ist is möglich, die Vorspannung durch Federkraft aufzubringen, welche auf das Stahlband bzw. die Stahlbänder wirkt.

Fig.1

EP 0 118 699 A2

Croydon Printing Company Ltd.

# EISENFUHR & SPEISER
### Patentanwälte · European Patent Attorneys

0118699

Unser Zeichen: S 922
Anmelder /Inh.: Siegerland-Bremsen
Aktenzeichen: Neuanmeldung

Datum: 26. Januar 1984

Patentanwälte
Dipl.-Ing. Günther Eisenführ
Dipl.-Ing. Dieter K. Speiser
Dr.-Ing. Werner W. Rabus
Dipl.-Ing. Detlef Ninnemann

Siegerland-Bremsen Ende GmbH + Co.

6342  Haiger - 9

---

Stellantrieb

---

Die Erfindung betrifft einen Stellantrieb zum winkelgenauen Positionieren einer Abtriebswelle, mit einem
untersetzenden Spindeltrieb, dessen eines Teil axial
unverschieblich, aber dreh- und antreibbar gelagert ist
und dessen anderes Teil drehfest und längsverschieblich
mit dem einen Teil in Eingriff steht, wobei am längsverschieblichen Teil des Spindeltriebs ein Ende eines
biegsamen, dehnungsarmen Zugmittels unter Vorspannung
befestigt ist, dessen anderes Ende drehmomentschlüssig
mit der Abtriebswelle verbunden ist.

Stellantriebe dieser Art haben vielfältige Einsatzmöglichkeiten. Sie dienen beispielsweise zur Nachführung

GE/il

Martinistraße 24   D-2800 Bremen 1 · Telefon (0421) 32 80 37 · Telecopierer · Telex 02 44 020 fepat d

von Anzeigen oder zur Bewegung von Robotergliedern.

Der eingangs erwähnte, aus der US-PS 3 614 898 bekannte
Stellantrieb besteht aus einer endseits ortsfest, aber
drehbar gelagerten Spindel und einer auf dieser durch
Drehen der Spindel axial beweglichen Mutter, an deren
axialen Enden aus beispielsweise Phosphorbronze bestehende Bänder befestigt sind. Die anderen Enden der einander kreuzenden Bänder sind an der Umfangsfläche eines
Kurvensegments einstell- und daher vorspannbar befestigt,
welches seinerseits an der sich senkrecht zur Spindelachse erstreckende Abtriebswelle befestigt ist.

Sofern es sich beim Kurvensegment dieses bekannten Stellantriebs - wie dargestellt - um ein Kreissegment handelt,
bleibt die in einer bestimmten Ausgangsstellung eingestellte Vorspannung und damit die Spielfreiheit zwischen
Mutter und Abtriebswelle bei Drehung der Spindel (also
beim Betrieb des Stellantriebs) nicht erhalten, weil
sich die geometrischen Verhältnisse ändern. Um dem Rechnung zu tragen, bedürfte es einer komplizierten Kurvenkonstruktion, welche wiederum eine Bewegung der Abtriebswelle über mehr als einen relativ kleinen Schwenkwinkel
unmöglich macht.

Vor allem aber erlaubt bei dem bekannten Stellantrieb
die Vorspannung der Bänder gegenüber der Mutter nicht
den Ausgleich eines Spiels zwischen der Spindel und der
Mutter. Auf die Ausschaltung dieses Spiels aber kommt
es gerade entscheidend an, weil es auf die Genauigkeit
der Bewegungsübertragung wesentlichen Einfluß hat.

Der Erfindung liegt daher die Aufgabe zugrunde, einen
Stellantrieb der eingangs geschilderten Art so auszubilde

daß bei geringem baulichen und betrieblichen Aufwand
das winkelgenaue Positionieren der Abtriebswelle reproduzierbar ermöglicht wird, ohne daß übermäßig hohe
Anforderungen an die Präzision des Übertragungszuges
gestellt werden müssen. Darüber hinaus wird bevorzugt
ein Stellantrieb angestrebt, dessen Bauvolumen im Bereich
der Abtriebswelle klein ist, damit ein Einsatz an engen,
schwer zugänglichen Stellen möglich wird.

Diese Aufgabe wird erfindungsgemäß dadurch gelöst, daß
das Zugmittel sich in axialer Richtung der Längsverschiebung erstreckt und mit seinem anderen Ende kraft-
oder formschlüssig um die Abtriebswelle geführt ist,
und daß eine Einrichtung vorgesehen ist, die Antrieb
und Abtrieb gegeneinander vorspannt. Durch die Vorspanneinrichtung wird jegliches Spiel zwischen Antrieb und
Abtrieb ausgeschaltet, und die fluchtende Anordnung
des Zugmittels zur Spindel gewährleistet eine stets
gleichbleibende, lineare Übertragungskinematik, welche
nicht nur das Anfahren bestimmter Winkelstellungen der
Abtriebswelle über größere Winkelbereiche (bis hin zu
einer vollen Umdrehung und sogar darüber hinaus) ermöglicht, sondern auch die bleibende Reproduzierbarkeit
solcher Ansteuerungsvorgänge erhöht. Überdies läßt sich
das zwischen Spindel und Abtriebswelle lediglich längsverschobene Zugmittel ohne weiteres an relativ entlegene,
enge Stellen führen - beispielsweise die Glieder eines
Roboters.

Die (Dreh-)Vorspannung der Abtriebswelle kann in mannigfaltiger Art erfolgen. Im einfachsten Fall wird eine
Drehfeder genügen, die über den Stellbereich eine
ausreichend gleichmäßige Vorspannkraft aufbringt.

Von Nachteil für die Relation der Stellung des Drehantriebs zur Stellung der Abtriebswelle (und damit
die Reproduzierbarkeit der Übertragung) ist allerdings, daß thermische Einflüsse, beispielsweise eine
Dehnung des Zugmittels, die Zuordnung von Drehantrieb
zu Abtriebswelle verändern.

Vorzugsweise ist jedoch vorgesehen, daß die Vorspanneinrichtung ein zweiter Spindeltrieb mit zum ersten
Spindeltrieb gegenläufig gleichem Vorschubweg ist und
mit Hilfe eines gleichartigen Zugmittels an der Abtriebswelle angreift. Dadurch werden auf einfache Weise die
vorerwähnten, für die sichere Reproduzierbarkeit der
angesteuerten Stellungen der Abtiebswelle nachteiligen
Einflüsse automatisch kompensiert.

Es ist zwar aus der DE-PS 11 33 961 bekannt, die Schwenkbewegung eines Greif- oder Übergabearmes mit Hilfe zweier
gegenläufig betriebenen Kolben-Zylinder-Einheiten zu
bewerkstelligen, die parallel zueinander angeordnet sind
und durch ein jeweils koaxial abgehendes, um die Schwenkwelle des Armes geführtes Band verbunden sind. Als Stellantrieb wäre eine derartige Vorrichtung aber ungeeignet,
weil der pneumatische Antrieb selbst dann, wenn er in
der dort gezeigten Weise hydraulisch abgestützt ist,
weder die erforderliche Übertragungsgenauigkeit noch
die notwendige sichere Reproduzierbarkeit der Ansteuerungsstellungen erlaubt. Hierzu bedarf es des Formschlusses
zwischen Antrieb und Abtrieb, der jedoch im Stand der
Technik mit den oben geschilderten Toleranz- und Raumproblemen behaftet war.

Im einzelnen kann die Anordnung so getroffen sein,
daß eine Feder die Lager der an sich axial unverschieblich drehbar gelagerten Teile beider Spindeltriebe
gemeinsam in deren Achsrichtung vorspannt. In diesem
Falle bedarf es eines axialen Toleranzausgleichs im
Antrieb beider Spindeln.

Eine andere vorteilhafte Ausgestaltung, welche diesen
Ausgleich nicht erfordert, sieht vor, daß die Zugmittel
gegensinnig an je einer auf der Abtriebswelle drehbaren
Scheibe befestigt sind, und daß sich die Scheiben mittels
Federn im Gegensinne an einem auf der Abtriebswelle befestigten Mitnehmer unter Vorspannung abstützen. Beiden
Ausbildungen der Vorspanneinrichtung ist jedoch gemeinsam, daß im Betrieb des Stellantriebs keine Nachjustierungen erforderlich sind.

Das regelmäßig als dünnes Flachband insbesondere aus
Stahl ausgebildete Zugmittel kann die Antriebswelle
einfach oder auch mehrfach umschlingen, wenn durch geeignete Maßnahmen sichergestellt ist, daß die Umschlingung
der Abtriebswelle stets gleich bleibt. Bei der Anordnung
zweier Spindeltriebe können aber auch zwei getrennte
Stahlbänder vorgesehen und an der Abtriebswelle befestigt
sein; auch in diesem Falle kann jedes Band die Abtriebswelle teilweise, einfach oder auch mehrfach umschlingen.

Als Drehantrieb kommt mit Vorteil ein Impulsschrittmotor
in Frage, der digital angesteuert werden kann. Eine
besonders hohe Auflösung der Impulsschritte ergibt sich,
wenn man zwischen den Drehantrieb und den Spindeltrieb
bzw. die Spindeltriebe ein ebenfalls untersetzendes
Vorgelege schaltet. Beim Einsatz zweier Spindeltriebe kann das Vorgelege ein Stirnradgetriebe sein, wobei
ein Ritzel des Drehantriebs zwei gleichartige, jeweils
an dem axial unverschieblichen Teil eines der Spindeltriebe koaxial befestigten Stirnräder antreibt. Legt
man dabei das Ritzel zwischen die beiden Stirnräder,
so herrschen wiederum an beiden Getriebezügen identische Verhältnisse, jedoch müssen die Spindeltriebe
dann gegenläufig gewendelt sein.

Die Zeichnung veranschaulicht die Erfindung an mehreren
Ausführungsbeispielen in schematischer Darstellung,
wobei jeweils die

Fig. 1, 3 den Stelltrieb in (teilweise ge-
und 5 schnittener) Draufsicht und die

Fig. 2, 4 den Stelltrieb in Seitenansicht
und 6 (Fig. 2 im Mittelschnitt) zeigen.

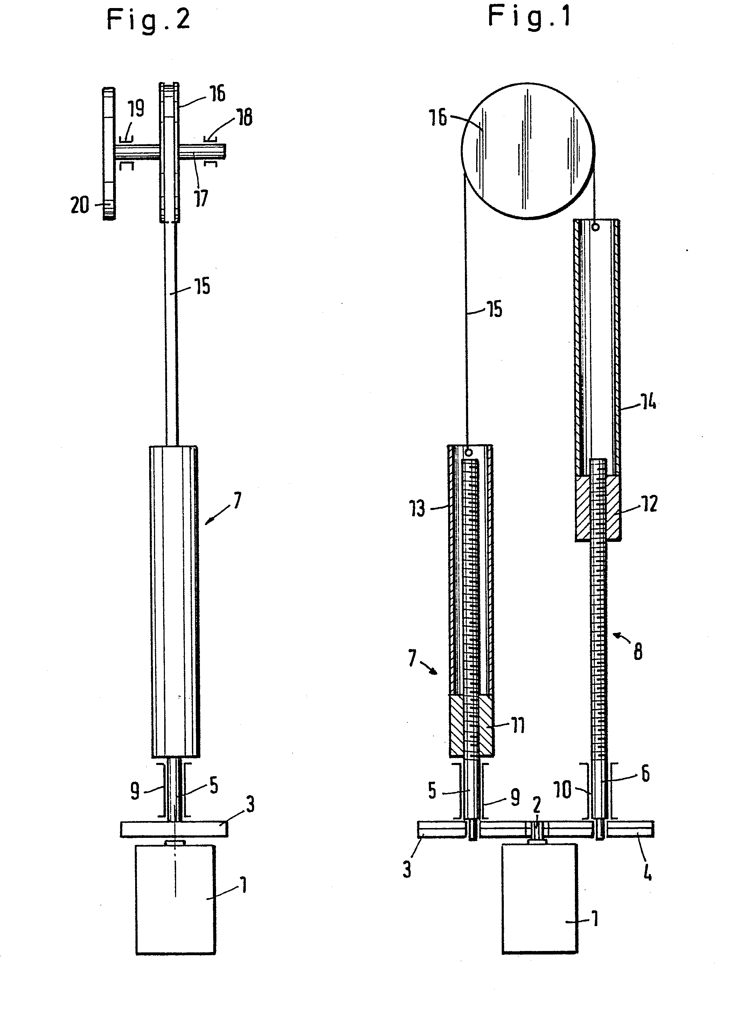

Die Figuren 1 und 2 stellen ein erstes Ausführungsbeispiel dar.

Der Motor 1 (Drehantrieb) treibt mit seinem
Ritzel 2 gleiche Stirnräder 3 und 4 im selben Drehsinn
an. Die Stirnräder 3, 4 sind endseits auf den Spindeln
5, 6 gleichartiger, aber gegenläufig gewendelter
Spindeltriebe 7, 8 befestigt. Die Spindeln 5, 6 sind
in Lagern 9, 10 drehbar, aber axial unverschieblich
gehalten. Auf die Spindeln 5, 6 sind Muttern 11, 12
geschraubt, die sich
in Hülsen 13, 14 axial fortsetzen, welche das gegenüberliegende freie Stirnende der Spindeln 5 bzw. 6 auch
dann übergreifen, wenn die Mutter 11 bzw. 12 bis in die
Nähe des Lagers 9 bzw. 10 auf die Spindel geschraubt
ist.

An den die freien Spindelenden der Spindeln 5, 6 übergreifenden Hülsen 13, 14 ist ein Zugmittel in Form eines
Stahlbandes 15 mit seinen beiden Enden befestigt. Es
erstreckt sich in axialer Richtung der Spindeln 5, 6
von diesen weg und ist um eine Scheibe 16 geführt,
welche auf einer Abtriebswelle 17 befestigt ist. Die
Abtriebswelle 17 ist in den Lagern 18, 19 gelagert
und trägt einen Teller 20, dessen winkelgenaue Dreheinstellung durch den Stelltrieb erfolgt.

Das Stahlband 15 liegt straff gespannt an der Scheibe
16 an und überträgt eine Verstellbewegung durch Reibung. Wenn im Beispiel keine größere Verstellung der
Abtriebswelle 17 als 180° erforderlich ist, kann
zusätzlich eine formschlüssige Befestigung des Stahlbandes 15 an der Scheibe 16 vorgesehen sein.

Im Betrieb wird eine Drehung des Motors 1 über das Ritzel 2 mit gleichem Drehsinn auf die Stirnräder 3 und 4 übertragen, so daß sich auch die Spindeln 5, 6 gleichsinnig und mit gleicher Winkelgeschwindigkeit drehen. Infolge der gegenläufigen Wendelung der Spindeln 5, 6 werden jedoch die Muttern 11, 12 dabei gegenläufig verschoben, und das um die Scheibe 16 geführte Stahlband 15 wird von den längsverschieblichen Teilen der Spindeltriebe 7, 8, nämlich den Muttern 11, 12 mit den Hülsen 13 bzw. 14 entsprechend mitgenommen.

Die Verdrehsteifigkeit des straff gespannten Stahlbandes 15 verhindert, daß sich die Muttern 11, 12 (mit den Hülsen 13, 14) verdrehen, wenn die Spindeln 5, 6 angetrieben werden. Reicht diese Verdrehsicherung nicht aus, so kann eine gesonderte Verdrehsicherung für die Muttern 11, 12 und/oder die Hülsen 13, 14 vorgesehen werden.

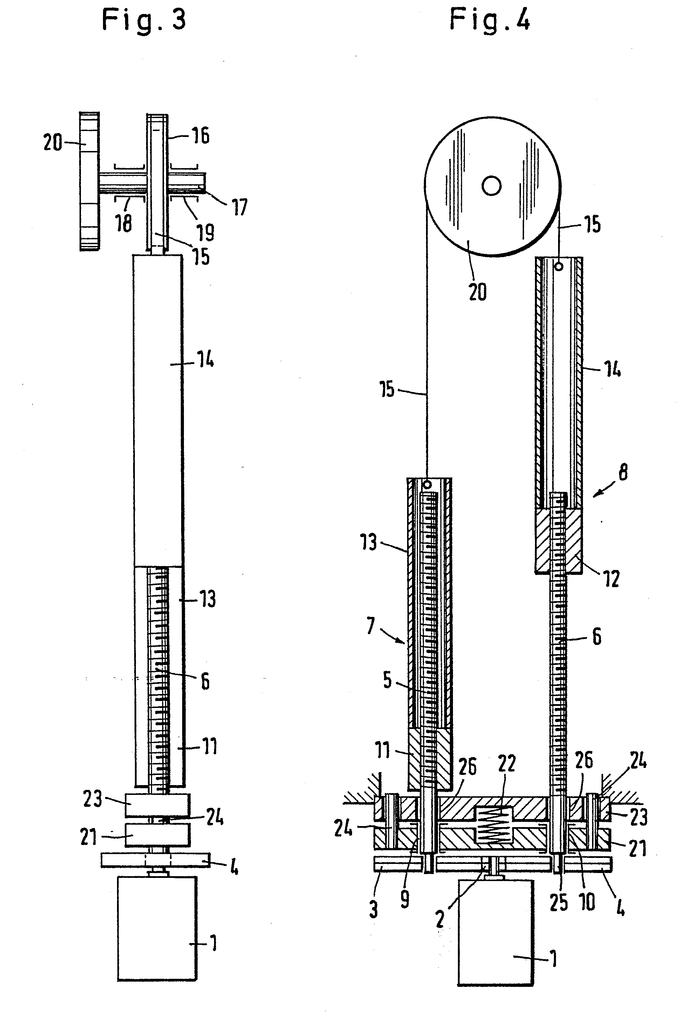

Die Ausführungsbeispiele der Fig. 3, 4 und 5, 6 veranschaulichen, wie die Vorspannung des Stahlbandes bewirkt und auch bei Änderung der Bandlänge (z.B. infolge thermischer Dehnung oder Schrumpfung) aufrechterhalten werden kann.

Wie Fig. 4 erkennen läßt, sind beim Ausführungsbeispiel der Figuren 3, 4 die Axiallager 9, 10 der Spindeln 5, 6 in einer Platte 21 angeordnet, welche sich über eine Druckfeder 22 an einer weiteren Platte 23 abstützt. Diese ist - wie angedeutet - ortsfest beispielsweise in einem Gehäuse gehalten. In der Platte 21 befestigte Führungsstifte 24 greifen gleitend in die Platte 23 ein, dienen als Verdrehsicherung und gewährleisten die parallele Verschiebung. Ferner sind in der Platte 23 Bohrungen 26 vorgesehen, durch welche die Spindeln 5, 6 mit Spiel hindurchgeführt sind.

Demgemäß können sich, um das Stahlband 15 vorzuspannen, beide Spindeltriebe 7, 8 unter dem Druck der Feder 22 in axialer Richtung geringfügig bewegen. Dabei kann die Antriebsanordnung so getroffen sein, daß der Motor 1 mit dem Ritzel 2 und den Stirnrädern 3, 4 die Bewegung mitmacht, oder die Antriebszapfen 25 der Spindeln 5, 6 können drehmomentenfest, aber axial verschieblich in den Stirnrädern 3, 4 gehalten sein.

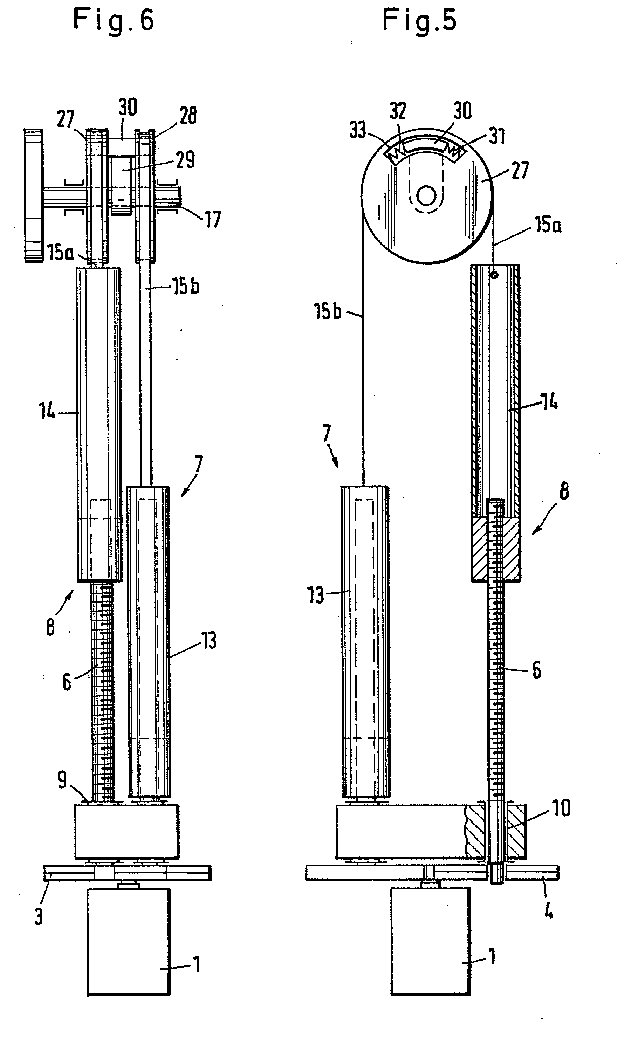

Beim Ausführungsbeispiel der Figuren 5 und 6 wird der Längenausgleich des Stahlbandes 15 auf andere Weise erzielt. Hier sind zwei Teilbänder 15a und 15b vorgesehen, die - gegensinnig - zumindest teilweise um je eine eigene Scheibe 27, 28 herumgelegt und an dieser befestigt sind, welche auf der Abtriebswelle 17 frei drehbar angeordnet sind. In teilkreisförmige Aussparungen 33 greift ein zwischen den Scheiben 27, 28 auf der Abtriebswelle 17 befestigter Mitnehmer 29 mit seinem ebenfalls im Querschnitt kreisbogenförmigen Abschnitt 30 ein. Zwischen dem Mitnehmerabschnitt 30 und der zum Stahlband 15a gehörigen Scheibe 27 (genauer: dem benachbarten Seitenrand ihrer Aussparung 33) ist eine Druckfeder 32 angeordnet, und auf die andere Seite des Mitnehmerabschnitts 30 wirkt eine Feder 31, welche in die Aussparung 33 der dem Stahlband 15b zugeordneten Scheibe 28 eingesetzt ist.

In beiden letztgenannten Ausführungsbeispielen führen Änderungen der Länge des Stahlbandes 15 (bzw. der Stahlbänder 15a, 15b) zu Änderungen der Vorspannung in den Federn 22 bzw. 31, 32, haben jedoch keinen Einfluß auf die Genauigkeit der Stellwertübertragung.

Die Spindeltriebe 7, 8 sind insbesondere Kugelrollspindeln, in denen keine gleitende und deshalb abreibende Relativbewegung der Muttern 11, 12 gegenüber den
Spindeln 5, 6 stattfindet. Die Dauerstandsfestigkeit
des Stelltriebs ist daher ungewöhnlich hoch; die Genauigkeit der Stellwertübertragung bleibt sehr lange
erhalten.

EISENFÜHR & SPEISER
Patentanwälte · European Patent Attorneys

0118699

Unser Zeichen: S 922

Anmelder /Inh.: Siegerland-Bremsen

Aktenzeichen: Neuanmeldung

Patentanwälte
Dipl.-Ing. Günther Eisenführ
Dipl.-Ing. Dieter K. Speiser
Dr.-Ing. Werner W. Rabus
Dipl.-Ing. Detlef Ninnemann

Datum: 26. Januar 1984

Siegerland-Bremsen Emde GmbH + Co.
6342 Haiger-9

------------------------------------------------

Ansprüche
=========

1. Stellantrieb zum winkelgenauen Positionieren einer
Abtriebswelle, mit einem untersetzenden Spindeltrieb,
dessen eines Teil axial unverschieblich, aber dreh-
und antreibbar gelagert ist und dessen anderes Teil
drehfest und längsverschieblich mit dem einen Teil in
Eingriff steht, wobei am längsverschieblichen Teil des
Spindeltriebs ein Ende eines biegsamen, dehnungsarmen
Zugmittels unter Vorspannung befestigt ist, dessen
anderes Ende drehmomentschlüssig mit der Abtriebswelle
verbunden ist, dadurch gekennzeichnet, daß das Zugmittel (15) sich in axialer Richtung der Längsverschiebung erstreckt und mit seinem anderen Ende kraft-
oder formschlüssig um die Abtriebswelle (17) geführt
ist, und daß eine Einrichtung vorgesehen ist, die
Antrieb und Abtrieb gegeneinander vorspannt.

2. Stellantrieb nach Anspruch 1, dadurch gekennzeichnet,
daß die Vorspanneinrichtung ein zweiter Spindeltrieb
(7, 8) mit zum ersten Spindeltrieb (8, 7) gegenläufig

GE/il

gleichem Vorschubweg ist und mit Hilfe eines gleichartigen Zugmittels (15) an der Abtriebswelle (17)
angreift.

3. Stellantrieb nach Anspruch 2, dadurch gekennzeichnet, daß das Zugmittel (15) mit je einem Ende am
längsverschieblichen Teil eines der beiden Spindeltriebe (7, 8) befestigt ist.

4. Stellantrieb nach Anspruch 2 oder 3, dadurch gekennzeichnet, daß eine Federkraft (Feder 22) so angeordnet
ist, daß sie die Lager (9, 10) der an sich axial unverschieblich drehbar gelagerten Teile (5, 6) beider
Spindeltriebe (7, 8) gemeinsam in deren Achsrichtung
vorspannt.

5. Stellantrieb nach Anspruch 4, dadurch gekennzeichnet, daß die beiden Teile (5, 6) in einer Platte (21)
gelagert sind, die sich über die Feder (22) an einer
ortsfesten Platte (23) abstützt.

6. Stellantrieb nach Anspruch 2, dadurch gekennzeichnet, daß die Zugmittel (15a, 15b) gegensinnig an je
einer auf der Abtriebswelle (17) drehbaren Scheibe (27,28)
befestigt sind, und daß sich die Scheiben mittels Federn
(31, 32) im Gegensinn an einem auf der Abtriebswelle befestigten Mitnehmer (29) unter Vorspannung abstützen.

7. Stellantrieb nach Anspruch 6, dadurch gekennzeichnet, daß ein kreisbogenförmiger Mitnehmerabschnitt (30)
in entsprechende Aussparungen (33) in den Scheiben (27,28)
eingreift, wobei auch die Federn (31, 32) in den Aussparungen (33) angeordnet sind.

Fig.2  Fig.1

Fig.3

Fig.4

Fig.6        Fig.5